# FASCICULE DE BREVET EUROPEEN

(11) **EP 3 375 073 B1**
(45) Date de publication et mention de la délivrance du brevet: **08.12.2021**
(21) Numéro de dépôt: 16806269.3
(22) Date de dépôt: 09.11.2016
(51) Int. Cl.: H02K 3/52, H02K 5/22, H02K 11/33

(54) **MODULE DE COMMANDE D'ALIMENTATION D'UN MOTEUR ELECTRIQUE**
MODUL ZUR STEUERUNG DER STROMVERSORGUNG EINES ELEKTROMOTORS
MODULE FOR CONTROLLING THE POWER SUPPLY OF AN ELECTRIC MOTOR

(30) Priorité: 13.11.2015 FR 1560884
(43) Date de publication de la demande: 19.09.2018
(73) Titulaire: Valeo Systemes Thermiques, 78322 Le Mesnil Saint-Denis (FR)
(72) Inventeur: ROUSSEIL, Xavier, 78322 Le Mesnil Saint-Denis Cedex (FR); GOUMAIN, Xavier, 78322 Le Mesnil Saint-Denis Cedex (FR); FOURNIER, Jonathan, 78322 Le Mesnil Saint-Denis Cedex (FR)
(74) Mandataire: Valeo Systèmes Thermiques
(86) Numéro de dépôt international: PCT/FR2016/052916
(87) Numéro de publication internationale: WO 2017/081415

(56) Documents cités:
- WO-A1-03/081755
- WO-A1-2012/023245
- DE-A1-102011 082 511
- US-A1- 2006 006 094

## Description

La présente invention se rapporte au domaine des moteurs électriques à commutation électronique, notamment dans le cas d'application à des dispositifs de pulsion d'air dans des véhicules automobiles,

Un dispositif de pulsion d'air équipé d'un moteur électrique selon l'invention est, par exemple, utilisé dans un système de ventilation, de chauffage et/ou de climatisation d'un véhicule automobile.

Les moteurs électriques à commutation électronique, ou moteurs à courant continu sans balai (connu également sous la dénomination anglaise de « brushless »), comportent un ensemble rotor et stator, chacun de ces composants étant porteur d'éléments électromagnétiques dont l'interaction génère le déplacement du rotor relativement au stator. Le déplacement du rotor est piloté par une alimentation électrique des éléments électromagnétiques portés par le stator. Des éléments de connectique moteur relient le stator et des équipements électroniques portés par une plaque de circuits imprimés. Ces éléments de connectique s'étendent axialement depuis le stator et traversent la plaque de circuits imprimés dans des alésages prévus à cet effet, pour être ensuite soudés sur des plots disposés sur la face de la plaque de circuits imprimés orientée à l'opposé du moteur.

Un moteur triphasé comporte trois éléments de connectique moteur, régulièrement répartis à 120° autour de l'axe de rotation de l'ensemble rotor/stator, et la plaque de circuits porteuse des équipements électroniques présente des alésages, prévus pour le passage de ces éléments de connectique, qui sont régulièrement répartis à 120° de manière correspondante.

WO2012/023245, US2006/006094, DE102011082511 et WO03/081755 divulguent des modules de commande d'alimentation d'un moteur électrique, le module de commande d'alimentation comportant une plaque de circuits imprimés percée d'une pluralité de trous de passage respectivement associés à un plot de connexion électrique porté par ladite plaque au voisinage de chacun de ces trous de passage, les plots de connexion électrique étant configurés pour être solidarisés à des éléments de connectique moteur.

La présente invention s'inscrit dans ce contexte et elle vise à proposer une alternative aux constructions de modules de commande d'alimentation de moteur électrique connues par ailleurs, notamment dans le cas d'application d'un moteur triphasé tel qu'il vient d'être présenté. L'invention vise également à proposer dans ce contexte un dispositif de pulsion d'air associé.

Par dispositif de pulsion d'air, on comprend un dispositif permettant d'aspirer et/ou de souffler de l'air.

Le module de commanded d'alimentation d'un moteur électrique à communication électronique selon l'invention tel que défini par la revendication 1 est du type comportant une plaque de circuits imprimés percée d'une pluralité de trous de passage, aptes respectivement à laisser passage à un élément de connectique moteur rendu par ailleurs solidaire d'un stator du moteur électrique, respectivement associés à un plot de connexion électrique porté par ladite plaque au voisinage de chacun de ces trous de passage. Chaque plot de connexion électrique est destiné à être raccordé à l'élément de connectique traversant la plaque par un trou de passage. Selon l'invention, les plots de connexion électrique correspondants sont disposés sur une face de la plaque de sorte qu'on peut définir un cercle virtuel passant sensiblement par chacun des plots de connexion, lesdits plots étant concentrés sur une partie de la plaque de manière à former un arc de cercle de longueur plus petite que la moitié de la circonférence dudit cercle virtuel.

On comprend que selon l'invention, les trous de passage et les plots de connexion électrique sont regroupés dans une même partie de la plaque de circuits imprimés, de sorte qu'ils ne sont plus comme dans l'art antérieur disposés régulièrement de manière à former un cercle autour d'un point aligné sur l'axe de révolution du moteur électrique associé à la plaque de circuits imprimés, mais qu'ils sont agencés en un arc de cercle, dans une configuration plus resserrée.

Selon un mode de réalisation particulier, la plaque de circuits imprimés présente un alésage principal autour duquel sont agencés lesdits trous de passage de sorte que le centre de l'alésage principal est sensiblement confondu avec le centre dudit cercle virtuel, lesdits plots de connexion électrique étant répartis d'un même côté par rapport à l'alésage principal. On comprend que par sensiblement confondu, on cherche à préciser que le centre de l'alésage principal est confondu avec le centre du cercle virtuel ou qu'il peut être, sans sortir du contexte de l'invention, être positionné très proche de ce centre du cercle virtuel.

Selon une série de caractéristiques, prises seules ou en combinaison, on pourra prévoir que :
- le centre dudit cercle virtuel est décalé par rapport au barycentre de la plaque de circuits imprimés, notamment en étant plus proche d'un premier bord de la plaque que d'un deuxième bord opposé ;
- les trous de passage et les plots de connexion correspondants sont disposés entre ledit deuxième bord opposé et une droite sensiblement parallèle à ce deuxième bord opposé et passant par le centre dudit cercle virtuel ;
- la plaque de circuits imprimés comporte des transistors reliés par une piste électrique à un circuit d'alimentation, lesdits transistors étant agencés en une pluralité de groupes de transistors respectivement disposés autour d'un trou de passage et d'un plot de connexion correspondant ;
- trois trous de passage, et trois plots de connexion correspondants, sont régulièrement répartis du même côté de la plaque de circuits imprimés par rapport au centre dudit cercle virtuel ;
- un trou de passage central est disposé à sensiblement 60°, autour d'un axe passant par le centre du cercle virtuel, par rapport aux deux autres trous de passage latéraux l'entourant ;
- la plaque présente une forme polygonale et un premier bord sensiblement droit formé par un méplat, de sorte que ledit premier bord est plus proche du centre dudit cercle virtuel, disposé sensiblement au centre de la forme polygonale de la plaque avant qu'elle soit découpée par le méplat ;
- lesdits équipements électroniques comportent au moins une bobine formant filtre d'entrée du courant d'alimentation et disposé à l'opposé, par rapport au centre dudit cercle virtuel, des trous de passage et des plots de connexion correspondants, le long du premier bord de la plaque.

Selon une autre série de caractéristiques, prises seules ou en combinaison, on pourra prévoir que :
- la plaque de circuits imprimés est formée de deux couches superposées ;
- une première couche de la plaque porte les pistes électriques de la masse et la deuxième couche de la plaque porte les pistes électriques de l'alimentation positive ;
- la première couche est la couche en saillie de laquelle s'étendent les composants électroniques.

L'invention concerne également un moteur électrique comportant un ensemble rotor/stator et un module de commande d'alimentation tel qu'évoqué précédemment, les plots de connexion électrique étant configurés pour être solidarisés à des éléments de connectique moteur rendus solidaires du stator et s'étendant parallèlement à l'axe de rotation du rotor autour du stator.

Ce moteur électrique pourra être tel que la plaque de circuits imprimés comporte un alésage principal apte à être traversé par un arbre d'entraînement solidaire en rotation du rotor, les trous de passage aptes à être traversés par les éléments de connectique moteur étant répartis régulièrement autour de l'axe principal, du même côté de la plaque par rapport à cet alésage principal. Par même côté de la plaque, on entend que l'on peut découper la plaque en deux parties par une droite passant par l'alésage principal et que l'ensemble des trous de passage est disposé dans une seule des deux parties.

La présente invention concerne également un dispositif de pulsion d'air équipé d'un moteur électrique conforme à ce qui vient d'être décrit précédemment, et un système de chauffage, de ventilation et/ou de climatisation d'un véhicule automobile comprenant au moins un tel dispositif de pulsion d'air.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une représentation éclatée en perspective d'un dispositif de pulsion d'air comportant un moteur électrique à commutation électronique et un module de commande d'alimentation selon l'invention ;
- la figure 2 est une vue de face du module de commande d'alimentation illustré sur la figure 1 ;
- la figure 3 illustre schématiquement l'agencement des pistes électriques sur la plaque de circuits imprimés du module de commande d'alimentation selon l'invention ; et
- la figure 4 illustre schématiquement, en vue en coupe verticale, le module de commande illustré sur la figure 2 et un moyen support associé, également visible sur la figure 1.

Un dispositif de pulsion d'air 2, qui permet d'aspirer et/ou de souffler de l'air, comporte au moins un moteur électrique à commutation électronique 4, apte à entraîner en rotation une roue de ventilation, ici non représentée, par l'intermédiaire d'un arbre de sortie 6 du moteur électrique. Le dispositif comporte en outre au moins un moyen support 8 intégrant plusieurs fonctions parmi lesquelles le support du moteur électrique, le refroidissement des composants dudit dispositif et le support d'un module de commande d'alimentation 10 du moteur, comportant notamment une plaque de circuits imprimés 12.

Le moteur électrique comporte principalement un stator 14 inducteur et un rotor 16 induit, porteur de l'arbre de sortie 6 apte à entraîner la roue de ventilation. Le stator 14 est rendu solidaire du moyen support 8 du moteur, et le rotor 16 est agencé autour du stator 14 pour être entraîné en rotation sous l'effet des champs magnétiques générés par le bobinage et les aimants associés au rotor et au stator.

Dans le dispositif de pulsion d'air comportant le moteur électrique selon l'invention, les différents composants sont agencés de sorte que le stator 14 est disposé en regard du moyen support 8 et que celui-ci est interposé entre l'ensemble rotor/stator et le module de commande d'alimentation 10, ledit moyen support formant un dissipateur thermique porteur de la plaque de circuits imprimés 12. De façon préférentielle, le moyen support 8 est en métal, de manière à refroidir efficacement, par conduction thermique, les composants électroniques portés par cette plaque. Le moyen support peut notamment être en aluminium, de telle sorte que l'on associe pour cette pièce des caractéristiques de légèreté et de bonne conduction thermique.

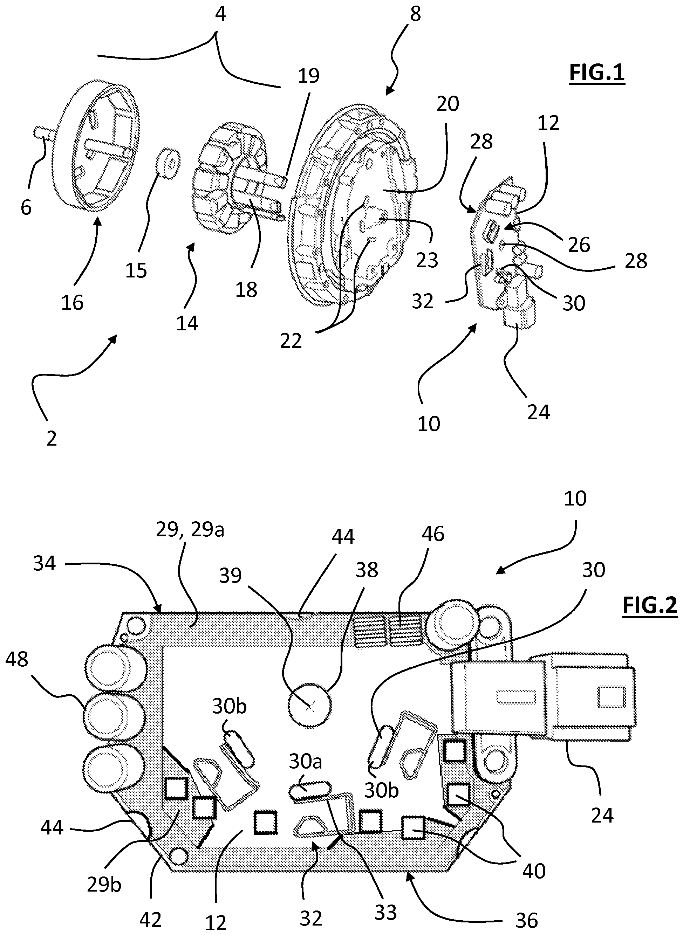

Tel que cela est visible sur la figure 1, le stator 14 présente une forme annulaire prolongée radialement par une pluralité de dents agencées en étoile. Ces dents portent chacune un enroulement de fil formant bobinage susceptible de générer un champ magnétique participant au déplacement du rotor par rapport au stator, sous l'effet des aimants permanents qu'ils portent respectivement, l'arbre de sortie 6 solidaire du rotor 16 étant monté à rotation par rapport au moyen support par l'intermédiaire de roulements 15. Ces roulements peuvent être des roulements à billes, tel qu'illustré schématiquement, mais on comprendra qu'ils pourraient prendre la forme de roulements à rouleaux, à aiguilles, ou autres...

Le stator 14 comporte un bobinage d'excitation composé de plusieurs phases, comportant chacune au moins un enroulement de fil, dont les sorties sont raccordées électriquement à des moyens d'alimentation portés par le module de commande d'alimentation 10, par l'intermédiaire de broches 18 solidaires du stator et formant des éléments de connectique moteur aptes à être raccordés à des moyens de connectique complémentaires portés la plaque de circuits imprimés tel que cela va être décrit ci-après. Dans le mode de réalisation particulier tel qu'illustré, le stator comporte douze dents bobinées en triphasé et trois broches 18, distinctes et associées respectivement à chacune des phases, forment des éléments de connectique du moteur. Ces broches 18 s'étendent longitudinalement depuis le stator, parallèlement à l'axe de rotation de l'ensemble rotor/stator, et elles traversent le moyen support 8 pour être respectivement connectées, à leur extrémité libre 19, sur des moyens de connexion complémentaires solidaires de la plaque de circuits imprimés 12.

Le moyen support 8 permet la fixation de l'ensemble des composants du moteur électrique et des moyens d'alimentation de ce moteur relativement à la structure du véhicule. Il présente notamment sur une première face 20 une zone de réception de la plaque de circuits imprimés 12, et sur une deuxième face opposée un fût, ici non visible, sur lequel est monté le stator 14. Le moyen support est ici notable en ce qu'il comporte une pluralité d'alésages traversants 22 formés dans ce moyen support de manière à s'étendre longitudinalement de la première face 20 à la face opposée. Les alésages traversants 22 présentent une forme complémentaire à celle des broches 18, avec des dimensions légèrement supérieures à celles des broches pour autoriser leur passage à travers le moyen support. Par ailleurs, la dimension longitudinale des broches et l'épaisseur du moyen support sont telles que l'extrémité libre 19 des broches 18 s'étendent au-delà de la première face 20 du moyen support 8 lorsque les broches ont traversé celui-ci. Tel que cela détaillé ci-après, il est intéressant que la première face 20 dispose sensiblement en son centre un fût 23 de centrage de la plaque de circuits imprimés 12. Tel que cela a pu être précisé précédemment, et ceci pouvant être appliqué pour chaque utilisation de ce terme dans la description, on comprend que l'utilisation du terme sensiblement permet d'inclure dans le contexte de l'invention des agencements légèrement différents, ici une position du fût non exactement centré sur la première face, mais positionné avec un léger décalage par rapport au centre.

Le module d'alimentation électrique 10 comporte une plaque de circuits imprimés 12 et un embout 24 de raccordement à un réseau électrique, l'embout et une pluralité de composants électroniques étant rapportés, notamment soudés, sur une première face 26 de la plaque de circuits imprimés 12. La deuxième face 28 de cette plaque de circuits imprimés 12 est destinée à être plaquée contre le moyen support 8, et à cet effet elle ne présente pas de composants électroniques en saillie. La plaque porte également sur une face et/ou l'autre au moins une piste électrique 29 apte à relier les composants électroniques entre eux et avec l'embout de raccordement 24.

La plaque de circuits imprimés 12 comporte notamment des trous de passage 30, en nombre égal au nombre de broches 18 formant les éléments de connectique moteur, ici trois, pour que l'extrémité libre 19 de ces broches puissent aller au-delà de la plaque de circuits imprimés lorsque le stator 14 et le module d'alimentation électrique 10 sont montés de part et d'autre du moyen support 8. Chacun de ces trous de passage 30 est associé à un plot de connexion 32 disposé au voisinage d'un trou de passage, de manière à pouvoir être solidarisé notamment par soudage, à une broche 18. On comprend que chaque plot de connexion est raccordé à la piste électrique 29 et qu'une transmission de courant peut se faire, lorsque tous les composants sont montés, depuis l'embout de raccordement 24 jusqu'aux phases du stator, par l'intermédiaire successivement de la piste électrique 29, des composants électroniques, des plots de connexion 32 et des broches 18.

Dans le mode de réalisation illustré, chacun des plots de connexion 32 présentent une forme sensiblement en U, avec une aile 33 disposée au droit du trou de passage correspondant afin que l'extrémité libre 19 d'une broche 18 puisse être plaquée contre cette aile et soudée.

En se référant notamment à la figure 2, on va détailler la forme de la plaque circuits imprimés 12, ainsi que l'agencement des composants électroniques et des trous de passage 30 et des plots de connexion 32 sur cette plaque de circuits imprimés 12.

La plaque présente ici une forme polygonale dans laquelle on peut identifier deux bords en regard, sensiblement parallèles les uns aux autres. L'un de ces bords, défini comme un premier bord 34, est formé par un méplat qui modifie la forme régulière du polygone. Il en résulte que le centre du polygone régulier dans lequel est inscrite la plaque se retrouve plus proche du premier bord 34 que du bord opposé 36.

Un alésage, dit alésage principal 38, est réalisé au voisinage de ce centre virtuel du polygone que forme la plaque, pour former un moyen d'indexage avec le fût de centrage 23 en saillie de la première face 20 du moyen support 8.

La plaque de circuits imprimés comporte ici deux couches, par exemple de cuivre, superposées l'une sur l'autre, avec une couche isolante (couche de polymère époxyde PR4 par exemple) entre elles.

Les trous de passage 30 et les plots de connexion électrique 32 correspondants sont disposés sur une face de la plaque de circuits imprimés 12 en une forme d'arc de cercle, de sorte qu'on peut définir un cercle virtuel passant sensiblement par chacun des plots de connexion et un centre de ce cercle virtuel 39. Notamment, il est visible sur le mode de réalisation illustré que les trous de passage et les plots de connexion électrique correspondants sont disposés sur une partie confinée de la plaque par rapport à l'alésage principal 38, en étant répartis régulièrement autour de celui-ci sur la portion d'arc de cercle qu'ils délimitent.

Les trous de passage, respectivement les plots de connexion électrique, sont ainsi concentrés sur une partie de la plaque de manière à former un arc de cercle passant successivement par chacun d'entre eux, de longueur plus petite que la moitié de la circonférence dudit cercle virtuel.

Dans l'exemple illustré, les trois broches 18 formant les éléments de connectique moteur sont disposées dans la même moitié du stator, espacées approximativement de 60°, et il en résulte une réalisation équivalente des alésages traversants 22 réalisés dans le moyen support 8 et des trous de passage 30 formés sur la plaque de circuits imprimés.

La position des trous de passage 30, respectivement des connecteurs 32, sur la plaque de circuits imprimés 12 est telle qu'ils définissent un arc de cercle centré sur un centre virtuel 39 autour duquel sont répartis à égale distance les trous de passage. On comprend que lorsque l'ensemble est monté, ce centre virtuel définissant la position des trous de passage de la plaque est disposé sur l'axe de rotation de l'ensemble rotor/stator. On pourra distinguer sur les trois trous de passage 30 de la plaque de circuits imprimés un trou de passage central 30a, qui dans l'arc de cercle défini par la succession des trous de passage, est disposé entre les trous de passage latéraux 30b définissant les extrémités de cet arc de cercle. Chacun de ces trous de passage latéraux est disposé à 60°, en prenant pour référence le centre de cercle virtuel, du trou de passage central 30a.

Tel que cela a pu être précisé précédemment, et tel que cela est visible sur la figure 2 notamment, le centre du cercle virtuel défini par la position des trous de passage 30, ici avantageusement confondu avec le centre de l'alésage principal 38, est plus proche du premier bord 34 de la plaque 12 que du deuxième bord opposé 36, et il est notable que les trous de passage et les plots de connexion correspondants sont disposés entre le deuxième bord opposé et une droite sensiblement parallèle à ce deuxième bord opposé et passant par le centre dudit cercle virtuel.

Cette disposition particulière des trous de passage 30 et des plots de connexion 32 associés, concentrée sur une moitié de la plaque de circuits imprimés 12, est accompagnée d'une disposition particulière de certains des composants électroniques soudés sur cette plaque. En effet, les composants électroniques comprennent entre autres des transistors de puissance 40 qui sont disposés sur la piste électrique 29 entre les éléments de connectique moteur et l'embout de raccordement 24 des moyens d'alimentation, et ces transistors 40 sont avantageusement agencés par groupes de transistors autour de chacun des plots de connexion, au plus près de la broche 18 destinée à être soudée sur ce plot de connexion 32. On peut ainsi réduire au maximum les longueurs des pistes électriques, ce qui présente des avantages aussi bien d'un point de vue thermique, d'encombrement et de diminution des rayonnements électromagnétiques. De plus, il est intéressant de regrouper la majeure partie des différents composants électroniques dans une moitié de la plaque de circuits imprimés pour faciliter le refroidissement de ces composants par un même flux d'air circulant dans le dispositif.

Le méplat, qui forme le premier bord 34 et qui modifie la forme polygonale régulière de la plaque de circuits imprimés 12, peut être aisément réalisé du fait de la disposition, d'un même côté de cette plaque de circuits imprimés, des trous de passage 30 et des plots de connexion 32 associés, et des transistors de puissance 40 groupés autour de ces plots de connexion. On peut ainsi proposer une plaque de circuits imprimés aux dimensions réduites par rapport à ce qui se fait dans l'art antérieur et faire de la sorte des économies d'échelle importantes sur une production massive de telles plaques de circuits imprimés.

Par ailleurs, la plaque de circuits imprimés 12 est agencée de sorte que ladite au moins une piste électrique 29 est disposée essentiellement sur le pourtour extérieur de la plaque de circuits imprimés, c'est-à-dire en longeant les bords de la plaque. La piste électrique présente ainsi une portion principale 29a sensiblement annulaire, qui s'étend sur tout le pourtour de la plaque, et des branches 29b qui partent de cette portion principale vers le centre de la plaque pour relier les transistors. Cette configuration et le passage d'un courant de puissance continue dans cette portion sensiblement annulaire 29a permet de réaliser un anneau de garde autour de la plaque, c'est-à-dire un blindage électromagnétique empêchant entre autres les ondes électromagnétiques provenant de l'extérieur du dispositif de venir perturber le fonctionnement du module d'alimentation du moteur.

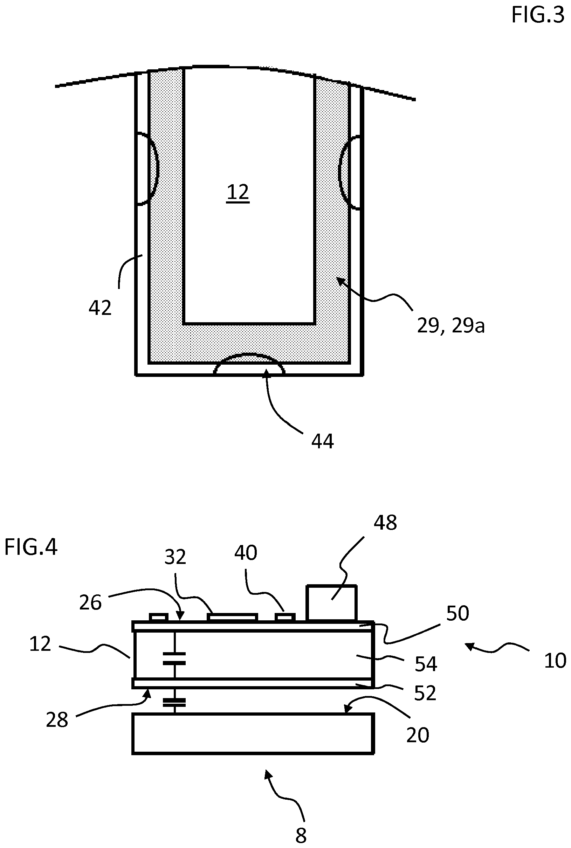

Afin notamment de permettre la manipulation de la plaque de circuits imprimés, un bord isolant 42 est disposé sur tout le pourtour de la plaque. Par bord isolant, on comprend que la piste électrique 29 ne s'étend par depuis le bord de la plaque, mais qu'une zone vierge d'élément conducteur électriquement est agencée sur une dimension déterminée depuis ce bord, sur environ 2 à 3 millimètres par exemple. Ce bord isolant, visible sur la figure 2, a été rendu particulièrement visible sur la figure 3 où on a représenté schématiquement cette disposition périphérique de la portion annulaire 29a sur la plaque de circuits imprimés, représentée partiellement.

Différentes zones de poinçonnage 44 sont ménagées et il est notable que ces zones de poinçonnages n'empiètent que sur le bord isolant 42 et sur la portion annulaire 29a de la piste électrique 29, de sorte qu'aucun composant électronique n'est prévu à proximité de ces zones. Le poinçonnage consiste en une opération industrielle de découpage d'une plaque de circuits imprimés aux dimensions souhaitées dans un panneau réalisé en grandes dimensions industrielles. Le poinçonnage est un procédé de découpage rapide et économique, mais ce procédé industriel rajoute classiquement des contraintes sur le design, du fait que l'on ne peut disposer de composants électroniques proche des points de poinçonnage, situés en bord de carte. Les composants doivent impérativement être à distance, environ au moins 5mm, de la zone de poinçonnage pour éviter leurs destructions. On comprend que le fait de placer les pistes de puissance en bord de la plaque de circuits imprimés, et non les composants, permet de disposer de la place nécessaire pour faire du poinçonnage.

La plaque de circuits imprimés 12 porte une pluralité de composants électroniques parmi lesquels les transistors de puissance 40 déjà évoqués. On pourra également citer une bobine 46 disposée à proximité de l'embout de raccordement 24 des moyens d'alimentation pour filtrer la tension d'alimentation, et une pluralité de condensateur 48, ici disposés en série pour stocker de l'énergie électrique.

Les condensateurs 48 et la bobine 46 sont disposés le long de la portion annulaire 29a de la piste électrique, sur une même première face 26 de la plaque de circuits imprimés 12. Lorsque le dispositif est assemblé, cette première face est tournée à l'opposé du moyen support 8, de sorte que les composants ne gênent pas le plaquage de la plaque contre le moyen support 8.

Dans le cadre de ce qui a été décrit précédemment, c'est-à-dire une plaque de circuits imprimés 12 réalisée par une superposition de deux couches à graver, il est avantageux de prévoir que les pistes électriques 29 soient réparties sur l'une et l'autre des deux couches de la plaque de circuits imprimés. On se référera notamment aux figures 3 et 4 pour la description d'un tel agencement.

Les pistes électriques sur chacune d'une première couche 50 et d'une deuxième couche 52 sont réalisées en périphérie de la couche correspondante, dans un agencement annulaire tel que précédemment décrit, de sorte que les pistes électriques sont situées l'une au-dessus de l'autre, séparée par la couche de polymère époxyde 54.

La piste électrique formée sur la première couche 50 est utilisée pour faire un anneau de garde de masse, c'est-à-dire raccordé à la masse électrique, et la piste électrique formée sur la deuxième couche 52 est utilisée pour faire un anneau de garde raccordé à une borne de tension positive fournissant à titre d'exemple une tension sensiblement égale à 12V.

L'anneau de garde de masse et l'anneau de garde positif sont agencés en vis-à-vis, l'un au-dessus de l'autre, ce qui a d'une part pour effet de réduire la superficie sur la plaque de circuits imprimés des surfaces rayonnantes, et ce qui créé des capacités parasites avantageuses pour la fonction de blindage électromagnétique, tel que cela est illustré sur la figure 4.

L'agencement de telle ou telle piste sur l'une ou l'autre des faces de la plaque de circuits imprimés répond à plusieurs considérations. Il est d'une part intéressant de prévoir que les pistes de pollution électromagnétiques, c'est-à-dire les pistes raccordées à la borne positive, soient disposées du côté de la plaque de circuits imprimés amené à être plaquée contre le moyen support, afin de les confiner et limiter leur propagation. Il est d'autre part intéressant d'enserrer ces pistes de pollution par un blindage d'une part formé par le moyen support en aluminium relié électriquement à la masse et d'autre part formé par la géométrie particulière des pistes électriques sur la première couche 50 reliés là encore à la masse électrique. Dans ce dernier cas, on enferme la deuxième couche 52 entre deux blindages de masse, grâce d'une part à la première couche 50 qui intègre un plan de masse et un anneau de garde et grâce d'autre part au moyen support 8, formant radiateur métallique, qui est relié électriquement à la masse.

La description qui précède vise à expliquer comment l'invention permet d'atteindre les objectifs qu'elle s'est fixés et notamment de proposer un module de commande d'alimentation et le moteur électrique associé qui permettent, par un agencement particulier des composants habituels de tels dispositifs, d'une part de limiter la taille de la plaque de circuits imprimés et donc du module de commande, ce qui permet notamment de limiter le coût de revient du module, d'autre part de condenser les pistes électriques et les composants sur cette plaque de circuits imprimés, ce qui permet par exemple de limiter les surfaces rayonnantes sur ces plaques et de positionner les composants électroniques plus efficacement dans un flux d'air de refroidissement.

Toutefois, l'invention n'est pas limitée à la seule disposition décrite en regard des figures, dès lors que l'ensemble des plots de connexion et les trous de passage pour les éléments de connectique sont disposés du même côté par rapport à l'alésage central. Notamment, le nombre de plots et le nombre de trous de passage pourraient être différents du nombre de trois tel que décrit dans le cas d'une application à un moteur polyphasé autre que triphasé, dès lors qu'ils sont agencés du même côté de la plaque, tel que cela a pu être évoqué précédemment.

## Revendications

1. Module de commande d'alimentation (10) d'un moteur électrique comportant un ensemble rotor/stator, le module de commande d'alimentation (10) comportant une plaque de circuits imprimés (12) percée d'une pluralité de trous de passage (30) respectivement associés à un plot de connexion électrique (32) porté par ladite plaque au voisinage de chacun de ces trous de passage, les plots de connexion électrique étant configurés pour être solidarisés à des éléments de connectique moteur rendus solidaires du stator et s'étendant parallèlement à l'axe de rotation du rotor autour du stator, dans lequel les plots de connexion électrique (32) sont disposés sur une face (26) de la plaque de circuits imprimés (12) de sorte qu'on peut définir un cercle virtuel passant sensiblement par chacun des plots de connexion (32), lesdits plots étant concentrés sur une partie de la plaque de circuits imprimés (12) de manière à former un arc de cercle de longueur plus petite que la moitié de la circonférence dudit cercle virtuel, la plaque de circuits imprimés (12) comportant une pluralité d'équipements électroniques (40, 46, 48) et au moins une piste électrique (29) configurée pour relier les équipements électroniques entre eux ainsi qu'à des moyens d'alimentation électrique (24) et auxdits plots de connexion électrique (32)
**caractérisé en ce que** la ou les pistes électriques (29) sont agencées à la périphérie de la plaque de circuits imprimés (12), autour desdits trous de passage (30) et des plots de connexion électrique associés (32).

2. Module selon la revendication 1, **caractérisé en ce que** la plaque de circuits imprimés (12) présente un alésage principal (38) autour duquel sont agencés lesdits trous de passage (30) de sorte que le centre de l'alésage principal est sensiblement confondu avec le centre (39) dudit cercle virtuel, lesdits plots de connexion électrique (32) étant répartis d'un même côté par rapport à l'alésage principal.

3. Module selon la revendication 1 ou 2, **caractérisé en ce que** le centre (39) dudit cercle virtuel est décalé par rapport au barycentre de la plaque de circuits imprimés (12), plus proche d'un premier bord (34) de la plaque de circuits imprimés (12) que d'un deuxième bord opposé (36).

4. Module selon la revendication précédente, **caractérisé en ce que** les trous de passage (30) et les plots de connexion (32) correspondants sont disposés entre un des bords (36) de la plaque de circuits imprimés (12) et une droite sensiblement parallèle à ce bord (36) et passant par le centre (39) dudit cercle virtuel.

5. Module selon l'une des revendications 3 ou 4, **caractérisé en ce que** la plaque de circuits imprimés (12) présente une forme polygonale dans laquelle ledit premier bord (34) sensiblement droit est formé par un méplat.

6. Module selon l'une des revendications précédentes, **caractérisé en ce que** ladite plaque de circuits imprimés (12) comporte des transistors (40) reliés par une piste électrique (29) à un circuit d'alimentation, lesdits transistors (40) étant agencés en une pluralité de groupes de transistors respectivement disposés autour d'un trou de passage (30) et d'un plot de connexion correspondant (32).

7. Module selon l'une des revendications précédentes, **caractérisé en ce qu'**il comporte trois trous de passage (30), et trois plots de connexion correspondants (32), régulièrement répartis du même côté de la plaque de circuits imprimés (12) par rapport au centre dudit cercle virtuel (39).

8. Module selon la revendication précédente, **caractérisé en ce qu'**un trou de passage central (30a) est disposé à sensiblement 60°, autour d'un axe passant par le centre dudit cercle virtuel (39), par rapport aux deux autres trous de passage latéraux (30b) l'entourant.

9. Module selon l'une des revendications précédentes, en combinaison avec au moins la revendication 3, **caractérisé en ce que** lesdits équipements électroniques comportent au moins une bobine (46) formant filtre d'entrée du courant d'alimentation et disposé à l'opposé, par rapport au centre dudit cercle virtuel (39), des trous de passage (30) et des plots de connexion (32) correspondants, le long du premier bord (34) de la plaque.

10. Module selon l'une des revendications précédentes, **caractérisé en ce que** la plaque de circuits imprimés (12) est formée de deux couches (50, 52) superposées.

11. Module selon la revendication précédente, **caractérisé en ce qu'**une première couche (50) de la plaque porte les pistes électriques de la masse et **en ce que** la deuxième couche (52) de la plaque porte les pistes électriques de l'alimentation positive.

12. Module selon la revendication précédente, **caractérisé en ce que** la première couche (50) est la couche en saillie de laquelle s'étendent les composants électroniques.

13. Moteur électrique comportant un ensemble rotor/stator et un module de commande d'alimentation (10) selon l'une des revendications précédentes, les plots de connexion électrique (32) étant configurés pour être solidarisés à des éléments de connectique moteur (18) rendus solidaires du stator (14) et s'étendant parallèlement à l'axe de rotation du rotor (16) autour du stator.

## Patentansprüche

1. Modul zur Steuerung der Stromversorgung (10) eines Elektromotors, der eine Rotor-Stator-Anordnung umfasst, wobei das Modul zur Steuerung der Stromversorgung (10) eine Leiterplatte (12) umfasst, die von einer Mehrzahl von Durchgangslöchern (30) durchbohrt ist, die jeweils einem Stromanschlussstück (32) zugeordnet sind, das von der Platte in der Nähe jedes dieser Durchgangslöcher getragen wird, wobei diese Stromanschlussstücke dazu ausgestaltet sind, mit Motoranschlusselementen fest verbunden zu werden, die mit dem Motor fest verbunden wurden und sich parallel zur Drehachse des Rotors um den Stator erstrecken, wobei die Stromanschlussstücke (32) auf einer Seite (26) der Leiterplatte (12) so angeordnet sind, dass man einen virtuellen Kreis definieren kann, der im Wesentlichen durch jedes der Anschlussstücke (32) verläuft, wobei die Stücke auf einem Teil der Leiterplatte (12) derart konzentriert sind, dass sie einen Kreisbogen bilden, dessen Länge kleiner als die Hälfte des Umfangs des virtuellen Kreises ist, wobei die Leiterplatte (12) eine Mehrzahl von elektronischen Einrichtungen (40, 46, 48) und mindestens eine Leiterbahn (29) umfasst, die dazu ausgestaltet ist, die elektronischen Einrichtungen untereinander sowie mit Stromversorgungsmitteln (24) und den Stromanschlussstücken (32) zu verbinden, **dadurch gekennzeichnet, dass** die Leiterbahn oder die Leiterbahnen (29) am Umfang der Leiterplatte (12) um die Durchgangslöcher (30) und die Stromanschlussstücke (32) herum angeordnet sind.

2. Modul nach Anspruch 1, **dadurch gekennzeichnet, dass** die Leiterplatte (12) eine Hauptbohrung (38) aufweist, um die herum die Durchgangslöcher (30) so angeordnet sind, dass der Mittelpunkt der Hauptbohrung im Wesentlichen mit dem Mittelpunkt (39) des virtuellen Kreises zusammenfällt, wobei die Stromanschlussstücke (32) auf derselben Seite in Bezug auf die Hauptbohrung verteilt sind.

3. Modul nach Anspruch 1 oder 2, **dadurch gekennzeichnet, dass** der Mittelpunkt (39) des virtuellen Kreises in Bezug auf das Baryzentrum der Leiterplatte (12) versetzt ist und einem ersten Rand (34) der Leiterplatte (12) näher als einem zweiten entgegengesetzten Rand (36) ist.

4. Modul nach dem vorhergehenden Anspruch, **dadurch gekennzeichnet, dass** die Durchgangslöcher (30) und die entsprechenden Anschlussstücke (32) zwischen einem der Ränder (36) der Leiterplatte (12) und einer Geraden gelegen sind, die im Wesentlichen parallel zu diesem Rand (36) ist und durch den Mittelpunkt (39) des virtuellen Kreises verläuft.

5. Modul nach einem der Ansprüche 3 oder 4, **dadurch gekennzeichnet, dass** die Leiterplatte (12) eine polygonale Form aufweist, bei welcher der erste im Wesentlichen gerade Rand (34) durch eine Abflachung gebildet ist.

6. Modul nach einem der vorhergehenden Ansprüche, **dadurch gekennzeichnet, dass** die Leiterplatte (12) Transistoren (40) umfasst, die durch eine Leiterbahn (29) mit einem Stromversorgungskreis verbunden sind, wobei die Transistoren (40) zu einer Mehrzahl von Transistorgruppen angeordnet sind, die jeweils um ein Durchgangsloch (30) und ein entsprechendes Anschlussstück (32) herum gelegen sind.

7. Modul nach einem der vorhergehenden Ansprüche, **dadurch gekennzeichnet, dass** es drei Durchgangslöcher (30) und drei entsprechende Anschlussstücke (32) umfasst, die regelmäßig auf derselben Seite der Leiterplatte (12) in Bezug auf den Mittelpunkt des virtuellen Kreises (39) verteilt sind.

8. Modul nach dem vorhergehenden Anspruch, **dadurch gekennzeichnet, dass** ein zentrales Durchgangsloch (30a) im Wesentlichen bei 60° um eine durch den Mittelpunkt des virtuellen Kreises (39) verlaufende Achse in Bezug auf die beiden anderen es umgebenden seitlichen Durchgangslöcher (30b) angeordnet ist.

9. Modul nach einem der vorhergehenden Ansprüche in Kombination mit mindestens dem Anspruch 3, **dadurch gekennzeichnet, dass** die elektronischen Einrichtungen mindestens eine Spule (46) umfassen, die einen Eingangsfilter für den Versorgungsstrom bildet und in Bezug auf den Mittelpunkt des virtuellen Kreises (39) entgegengesetzt zu den Durchgangslöchern (30) und den entsprechenden Anschlussstücken (32) entlang des ersten Randes (34) der Platte gelegen ist.

10. Modul nach einem der vorhergehenden Ansprüche, **dadurch gekennzeichnet, dass** die Leiterplatte (12) aus zwei übereinanderliegenden Schichten (50, 52) gebildet ist.

11. Modul nach dem vorhergehenden Anspruch, **dadurch gekennzeichnet, dass** eine erste Schicht (50) der Platte die Leiterbahnen der Masse trägt und dass die zweite Schicht (52) der Platte die Leiterbahnen der positiven Stromversorgung trägt.

12. Modul nach dem vorhergehenden Anspruch, **dadurch gekennzeichnet, dass** die erste Schicht (50) die überstehende Schicht ist, von der aus sich die elektronischen Bauelemente erstrecken.

13. Elektromotor, der eine Rotor-Stator-Anordnung und ein Modul zur Steuerung der Stromversorgung (10) nach einem der vorhergehenden Ansprüche umfasst, wobei die Stromanschlussstücke (32) dazu ausgestaltet sind, mit Motoranschlusselementen (18) fest verbunden zu werden, die mit dem Stator (14) fest verbunden wurden und sich parallel zur Drehachse des Rotors (16) um den Stator herum erstrecken.

## Claims

1. Power supply control module (10) of an electric motor comprising a rotor/stator assembly, the power supply control module (10) comprising a printed circuit board (12) drilled with a plurality of through-holes (30) respectively associated with an electrical contact pad (32) borne by said board in the vicinity of each of these through-holes, the electrical contact pads being configured to be secured to motor connector elements secured to the stator and extending parallel to the axis of rotation of the rotor about the stator, wherein the electrical contact pads (32) are positioned on a face (26) of the printed circuit board (12) in such a way that a virtual circle can be defined that passes substantially through each of the contact pads (32), said pads being concentrated on a part of the printed circuit board (12) so as to form a circular arc of a length smaller than half the circumference of said virtual circle, the printed circuit board (12) comprising a plurality of electronic devices (40, 46, 48) and at least one electrical track (29) configured to link the electronic devices to one another as well as to electrical power supply means (24) and to said electrical contact pads (32)
**characterized in that** the electrical track or tracks (29) are arranged at the periphery of the printed circuit board (12), around said through-holes (30) and the associated electrical contact pads (32).

2. Module according to Claim 1, **characterized in that** the printed circuit board (12) has a main bore (38) around which said through-holes (30) are arranged in such a way that the centre of the main bore substantially coincides with the centre (39) of said virtual circle, said electrical contact pads (32) being distributed on one and the same side with respect to the main bore.

3. Module according to Claim 1 or 2, **characterized in that** the centre (39) of said virtual circle is offset with respect to the barycentre of the printed circuit board (12), closer to a first edge (34) of the printed circuit board (12) than an opposite second edge (36).

4. Module according to the preceding claim, **characterized in that** the through-holes (30) and the corresponding contact pads (32) are positioned between one of the edges (36) of the printed circuit board (12) and a straight line substantially parallel to this edge (36) and passing through the centre (39) of said virtual circle.

5. Module according to one of Claims 3 and 4, **characterized in that** the printed circuit board (12) has a polygonal form in which said substantially straight first edge (34) is formed by a flat section.

6. Module according to one of the preceding claims, **characterized in that** said printed circuit board (12) comprises transistors (40) linked by an electrical track (29) to a power supply circuit, said transistors (40) being arranged in a plurality of groups of transistors respectively positioned around a through-hole (30) and a corresponding contact pad (32).

7. Module according to one of the preceding claims, **characterized in that** it comprises three through-holes (30), and three corresponding contact pads (32), evenly distributed on the same side of the printed circuit board (12) with respect to the centre of said virtual circle (39).

8. Module according to the preceding claim, **characterized in that** a central through-hole (30a) is positioned at substantially 60°, about an axis passing through the centre of said virtual circle (39), with respect to the other two lateral through-holes (30b) on either side thereof.

9. Module according to one of the preceding claims, in combination with at least Claim 3, **characterized in that** said electronic devices include at least one coil (46) forming an input filter for the power supply current and positioned opposite, with respect to the centre of said virtual circle (39), the through-holes (30) and the corresponding contact pads (32), along the first edge (34) of the board.

10. Module according to one of the preceding claims, **characterized in that** the printed circuit board (12) is formed by two superposed layers (50, 52).

11. Module according to the preceding claim, **characterized in that** a first layer (50) of the board bears the electrical tracks of the ground and **in that** the second layer (52) of the board bears the electrical tracks of the positive power supply.

12. Module according to the preceding claim, **characterized in that** the first layer (50) is the projecting layer from which the electronic components extent.

13. Electric motor comprising a rotor/stator assembly and a power supply control module (10) according to one of the preceding claims, the electrical contact pads (32) being configured to be secured to motor connector elements (18) secured to the stator (14) and extending parallel to the axis of rotation of the rotor (16) around the stator.
